# EUROPÄISCHE PATENTSCHRIFT

(11) **EP 1 352 619 B1**
(45) Veröffentlichungstag und Bekanntmachung des Hinweises auf die Patenterteilung: **21.06.2006**
(21) Anmeldenummer: 03008557.5
(22) Anmeldetag: 14.04.2003
(51) Int. Cl.: A61C 13/00, B23K 26/36

(54) **Verfahren zur automatisierten Fertigung von Zahnersatz aus Keramik**
Method for automatically producing dental prostheses
Procédé pour la fabrication automatique de prothèses dentaires

(30) Priorität: 14.04.2002 DE 10216590
(43) Veröffentlichungstag der Anmeldung: 15.10.2003
(73) Patentinhaber: Weigl, Paul, Dr., 61348 Bad Homburg v.d.H. (DE)
(72) Erfinder: Weigl, Paul, Dr., 61348 Bad Homburg v.d.H. (DE); Werelius, Kristian, 63322 Rödermark (DE)
(74) Vertreter: Jochem, Bernd

(56) Entgegenhaltungen:
- WO-A-99/67048
- DE-A- 10 020 559
- US-A1- 2001 034 010

## Beschreibung

Die Erfindung betrifft ein Verfahren zur automatisierten Fertigung von Zahnersatz in Form von zahnärztlichen Restaurationen aus Keramik oder von keramischen, individuell geformten Abutments dentaler Implantate unter Anwendung eines computergesteuerten Lasers zur Formgebung durch Materialabtrag von einem Keramikrohling.

In der Zahnheilkunde besteht dringender Bedarf an verbesserten und zugleich kostenreduzierenden Therapieverfahren. Eine zentrale Rolle spielt neben Prophylaxemaßnahmen die maschinelle Fertigung von zahnärztlichen Restaurationen in Form von Einlagefüllungen und Zahnersatz. Ein weiterer Ansatz für verbesserte und kostensenkende Therapieverfahren ist die Erzielung eines langfristigen Verbundes zwischen Zahnhartsubstanz und Restaurationswerkstoffen. Damit ist eine signifikant höhere Überlebensrate des Therapieerfolgs verknüpft, weil Sekundärkaries und vorzeitiges Werkstoffversagen entscheidend limitiert werden.

Bei der Wiederherstellung von erkrankten oder verlorenen Zähnen sollen die natürlichen Zähne nachgeahmt werden. Die höchste Güte der Nachbildung bezüglich Festigkeit und Aussehen läßt sich derzeit durch keramische Werkstoffe erzielen. Daraus werden Restaurationen in Form von Einlagefüllungen (Inlay, Onlay, Veneer) und festsitzendem Zahnersatz (Krone, Brücke) hergestellt.

Als Zahnfüllungen werden generell Restaurationen bezeichnet, bei denen ein großer Anteil an Außenflächen des zu behandelnden Zahnes erhalten bleibt. Einlagefüllungen definieren eine Untergruppe von Zahnfüllungen, deren Füllungsmaterial außerhalb des Mundes zur gewünschten Form und Qualität verarbeitet und als ungeteilter Körper am Zahn befestigt wird. Von festsitzendem Zahnersatz wird gesprochen, wenn nur sehr geringe oder keine Anteile der Außenflächen der Zähne erhalten bleiben (Krone) oder ein Zahn durch die Restauration ersetzt wird (Brücke). Festsitzender Zahnersatz wird ebenso wie die Einlagefüllungen ausschließlich außerhalb des Mundes zur gewünschten Form und Qualität verarbeitet und ebenfalls mittels Befestigungsmaterialien mit dem Zahn verbunden. Festsitzende Kronen und Brücken werden zunehmend auch auf osseointegrierten Implantaten verankert. Als Abutment wird diejenige Implantatkomponente bezeichnet, die in die Mundhöhle ragt und auf der festsitzender Zahnersatz befestigt wird. Da das Abutment außerhalb der Mundes in der Form individualisiert werden kann, gibt es maschinelle Verfahren zur Herstellung von individuell geformten Abutments, insbesondere aus keramischem Material.

Die konventionelle Behandlungsweise entfernt kariöses Gewebe mit Hilfe eines rotierenden Schleifkörpers. Zur Aufnahme einer Einlagefüllung wird eine restaurationsmaterialspezifische Kavität in den Zahn geschliffen, zur Aufnahme einer Krone wird ein Zahn konisch präpariert. Die Grenze zwischen beschliffener und unbeschliffener Zahnhartsubstanz ist durch eine stufen- oder hohlkehlenförmige Präparationsgrenze definiert. Der beschliffene Zahn wird abgeformt, um die Einlagefüllung oder den festsitzenden Zahnersatz auf einem formidentischen Replika herzustellen. Die komplexe, individuelle Formgebung der Restauration wird durch folgende Verfahren erzielt:

Bei der Gieß- und Preßtechnik wird ein Wachsmodell der Restauration manuell modelliert und in eine feuerfeste Masse eingebettet. Eine geschmolzene Keramik wird in die entstandene Hohlform gegossen oder eingepreßt. Bei der Sintertechnik wird Keramikpulver schichtweise auf feuerfeste Replikas oder keramische Gerüste der Restauration appliziert und durch mehrere Brände aufgebaut. Die endgültige Form wird durch manuelles Abtragen von Material mit Schleifkörpern erzielt.

Aufgrund der umfangreichen manuellen Arbeitsschritte sowie der erforderlichen Gieß-, Preß- oder Sinterhärteprozesse ist eine reproduzierbare Werkstoffqualität und Fertigungspräzision der keramischen Restaurationen nicht gewährleistet.

Eine neuere Fertigungstechnik für keramische Restaurationen ist die computergesteuerte Formgebung mit herkömmmlichen Lasern, Fräsern, Schleifkörpern oder Lasern, vgl. DE 196 19 951 A1 und US 2001/0034010. Die dentalen CAx-basierten Fertigungssysteme gliedern sich meistens in drei Komponenten. Am Anfang der Prozeßkette steht eine Vermessungseinrichtung zur Erfassung von Zähnen oder von vom Zahntechniker modellierten Restaurationen aus Modellierwerkstoffen. Die Meßwerte der gescannten Oberflächen bilden die Eingangsdaten für die zweite Komponente. Im Falle von vermessenen Zähnen beinhaltet diese Komponente eine CAD-unterstützte Konstruktion der Restauration, im Falle einer vermessenen Restauration beinhaltet die Komponente eine Verarbeitung der Meßdaten in ein CAD- oder CAD-ähnliches Format. Anschließend wird für das in dem CAD-System vorliegende Bauteil Einlagefüllung oder Zahnersatz ein Steuerungsprozeß (CAM) für die formgebende NC-Fräsmaschine berechnet, die üblicherweise die dritte Komponente des Fertigungssystems darstellt.

Die Vielzahl der auf dem Markt erhältlichen dentalen CAD/CAM-Systeme spiegelt den unumkehrbaren Trend zur industriellen Fertigung von zahntechnischen Produkten, insbesondere von Halbzeugen in Form von Kronen- und Brückengerüsten wider, die anschließend von einem Zahntechniker manuell zu komplettem Zahnersatz ergänzt bzw. verblendet werden müssen. Im folgenden wird die dritte Komponente von einigen der verschiedenen maschinellen Fertigungssysteme für zahnärztliche Restaurationen kurz beschrieben:

Bei Seitenzahnkronen, insbesondere Seitenzahnbrücken, sind Keramiken mit hoher Festigkeit erforderlich, um den Kaukräften in diesem Bereich langfristig standzuhalten. Hochfeste Keramiken wie z.B. HIP-Y-ZrO₂ (TZP =Tetragonal Zirconia Polycrystals; 2-3% mol Y₂O₃) werden hierzu als Gerüststruktur eingesetzt (vgl. FR 2 808 200), welche vom Zahntechniker mit Verblendkeramik zur kompletten Restauration ergänzt wird. HIP-Y-ZrO₂ (TZP) läßt aufgrund seiner Festigkeit geringe Schichtdicken zu, die eine substanzsparende Präparation von Pfeilerzähnen und eine ästhetisch vorteilhafte Dimensionierung von Verbindern zu Brückenzwischengliedern ermöglichen. Andererseits erfordert die Bearbeitung von HIP-Zirkoniumdioxid im gesinterten Zustand (DCS® ; cad.esthetics® ) steife und damit teure NC-Fräsmaschinen. Außerdem ist das Herausfräsen der Restauration aus einem Keramikrohling mit einem hohen Werkzeugverschleiß und langen Fertigungszeiten verbunden. Beides verhindert eine kostengünstige und damit therapiekostensenkende Fertigung von Restaurationskomponenten wie Gerüsten. Aufgrund der Schleifkörperdimensionen bestehen zudem Limitationen bezüglich einer naturgetreuen Gestaltung von Kauflächen mit Fissuren. Einen Ausweg bietet die Bearbeitung von AlO₂ - oder ZrO₂ im nicht dicht gesinterten Zustand. Zwischen den keramischen Partikeln besteht lediglich ein Materialverbund durch organische Binder oder schwach ausgeprägte Sinterbrücken mit hohem Volumenanteil an Poren. Beide Werkstoffarten sind sogenannte Grünkörper von Keramiken. Sie zeigen eine sehr geringe Festigkeit - ähnlich wie Kreide - und sind spanend leicht bearbeitbar. Nach der spanenden Formgebung der Grünkörper werden diese dicht gesintert. Die enorme Schrumpfung von bis zu ca. 30 Volumenprozent kann durch eine Vergrößerung der Grünkörpergeometrie mit einem CAx-System kompensiert werden. Hierzu wird die Geometrie der Restauration entsprechend dem Ausmaß der Sinterschrumpfung softwareunterstützt vergrößert und die vergrößerte Restauration mittels einer NC-Maschine aus dem Grünkörperrohling herausgefräst. Die entstehenden Dimensionsfehler bei diesem Verfahren lassen nur die Herstellung von Gerüsten für Einzelkronen (Procera® ) und Brücken (LAVA® ; CERCON® ) zu, weil die hohe Sinterschrumpfung keine Herstellung von fraktalen Kauflächengeometrien in der klinisch erforderlichen Präzision ermöglicht. Die erforderliche Verblendung von Restaurationsgerüsten zu kompletten Kronen oder Brücken durch den Zahntechniker wird hingegen dazu genutzt, Paßungenauigkeiten am Restraurationsrand der Gerüste durch die Verblendkeramiken zu korrigieren. Damit ist die Verarbeitung von Grünkörperkeramik auf die Fertigung von Gerüsten limitiert.

Eine Möglichkeit zur wirtschaftlichen spanenden Bearbeitung von Keramiken bietet sich bei Verzicht auf Material hoher mechanischer Festigkeit. Dentale CAD/CAM-Systeme wie z. B. das Cerec® 3-System verwenden Glaskeramiken mit geringer mechanischer Festigkeit, die schleifend bearbeitet werden. Die Indikation ist jedoch auf Einlagefüllungen und gering belastbare Einzelkronen beschränkt. Außerdem erfordern insbesondere die Einzelkronen hohe Materialschichtstärken, um der geringen Festigkeit der Glaskeramik entgegenzuwirken. Der ausgeprägte Abtrag von Zahnhartsubstanz gefährdet die Vitalität des Zahnes aufgrund der enormen Traumatisierung oder Eröffnung der Pulpa.

Für alle vorstehend geschilderten Verfahren gilt, daß derzeit keine maschinellen Fertigungsverfahren für Keramiken verfügbar sind, die eine hochpräzise und schonende Formgebung von Restaurationen mittels NC-Fräsmaschinen ermöglichen. Diese fertigen mit Passungstoleranzen bis zu 300 µm und erreichen damit nicht die klinisch geforderte Toleranz unterhalb 100 um. Wegen der Schwingungen des Fräsers können auch keine dünnen Wandstärken von z. B. 0,1 bis 0,2 mm erzeugt werden.

Der Einsatz von konventionellen Lasern zur abtragenden Fertigung von Zahnersatz aus Keramik ist zwar vorgeschlagen und versucht worden, aber nicht zur praktischen Ausführung gekommen. Ohnehin werden Laser bei anderen Anwendungen, z. B. bei der Metallbearbeitung, in der Regel nur zum Schneiden, Bohren oder Beschriften eingesetzt, nicht aber, um eine dreidimensional strukturierte Oberfläche, die der Kaufläche eines Zahns vergleichbar wäre, durch Materialabtrag zu gestalten. Für eine derartige "bildhauerische" Anwendung ließe sich nicht die im hier interessierenden dentalen Bereich geforderte Genauigkeit von unter 100 µm erzielen. Darüber hinaus würden bei einer Oberflächenbehandlung mit konventionellen Laserstrahlwerkzeugen (z.B. Nd:YAG-Festkörperlaser, Excimer-Laser, etc.) im Pulsregime von Nanosekunden am Ort der Wechselwirkung zwischen Laser und Material unvermeidliche Werkstoffschädigungen in Form von Aufschmelzungen und Rissen entstehen. Die Wahrscheinlichkeit eines katastrophalen Versagens der Keramik erhöhte sich dadurch erheblich.

Aufgabe der Erfindung ist es, einen anderen, vorteilhafteren Weg zur Fertigung von zahnärztlichen Restaurationen aus Keramik und deren Oberflächenvergrößerung zur Erhöhung der Verbundfestigkeit zum Zahn aufzuzeigen.

Vorstehende Aufgabe wird durch das im Patentanspruch 1 angegebene Verfahren gelöst.

Obgleich auch Ultrakurzpulslaser seit längerer Zeit bekannt sind (vgl. DE 197 36 110), war bisher nicht daran gedacht worden, daß sie für eine wirtschaftliche Formgebung von Zahnersatz aus Keramik in Frage kommen könnten. Sie haben im Vergleich zu konventionellen Lasern zwar den Vorteil größerer Genauigkeit und der Vermeidung von Materialschädigungen durch Wärmeeinwirkung, aber andererseits ist der Materialabtrag pro Zeiteinheit sehr gering. Ein über eine Keramikfläche geführter Laserstrahl eines Ultrakurzpulslasers schneidet nur mit einer Schnittbreite von etwa 30 µm in das Material ein. Damit ist die Abtragsleistung im Verhältnis zu dem von einem Keramikrohling beim Herausarbeiten einer Restauration abzutragenden Volumen so klein und dementsprechend die Fertigungszeit so lang, daß ein Ultrakurzpulslaser für diese Anwendung aus wirtschaftlichen Gründen offenbar nicht in Frage kommt.

Dieser Gedankengang orientiert sich jedoch an den Erfahrungen und dem Vergleich mit den anderen bisher zum Herausarbeiten von Zahnersatz aus einem Keramikblock eingesetzten Werkzeugen. Fräsen, Schleifkörper und herkömmliche Laser haben in der Tat wesentlich höhere Abtragsleistungen. Dabei wird aber übersehen, daß ein Ultrakurzpulslaser mit großer Genauigkeit sowohl abtragend als auch abschneidend benutzt werden kann, wobei diese Unterscheidung keinen Einfluß auf die Betriebsweise des Lasers hat, sondern nur die im CAM-Verfahren computergesteuerte Führung des Laserstrahls relativ zum Keramikblock betrifft. Je nach momentan vorhandener Form der Oberfläche an der Auftreffstelle des Laserstrahls und dessen Richtung gehen abtragende und abschneidende Wirkung ineinander über. Durch Kombination der Anwendung von Schnitten zum Abtrennen einzelner Stücke vom Keramikblock mit durch Vergasung abtragenden Betrieb zur Erzeugung genauer dreidimensional konturierter Oberflächen kann dann doch die bisher vermißte Wirtschaftlichkeit beim Einsatz eines Ultrakurzpulslasers gewonnen werden.

In bevorzugter Weiterbildung der vorstehend dargelegten, der Erfindung zugrunde liegenden Erkenntnis ist vorgesehen, daß mittels des Ultrakurzpulslasers in einem ersten Arbeitsschritt der größte Teil des zum Herausarbeiten des dreidimensional konturierten Oberflächenbereichs des Zahnersatzes von dem Keramikrohling abzutragenden Materials in Stücken abgeschnitten wird, wobei die Oberfläche des Keramikrohlings an die herzustellende Oberfläche des Zahnersatzes angenähert wird, und anschließend der Rest des über der zu gestaltenden Oberfläche des Zahnersatzes vorhandenen Materials durch erodierende Arbeitsweise des Ultrakurzpulslasers vergast wird.

Dieser Vorschlag führt dazu, daß das meiste abzutragende keramische Material zeit- und energiesparend abgeschnitten wird, und nur noch ein verhältnismäßig kleines Volumen erodierend abgetragen werden muß, um die vorbestimmte dreidimensionale Form des Zahnersatzes zu erzeugen. Da der Ultrakurzpulslaser, insbesondere wenn seine Pulsdauer weniger als 500 fs beträgt, im Keramikblock neben dem auftreffenden Laserstrahl praktisch keine Wärmeeinflußzone hat, somit auch keine Wärmespannungen und Mikrorisse verursacht, können bereits die zum Abtrennen von Stücken notwendigen Schnitte die vorbestimmte Oberfläche der herzustellenden Restauration berühren. Die nachfolgende erodierende Bearbeitung mit dem Ultrakurzpulslaser ermöglicht danach ebenfalls ein definiertes, reproduzierbares, gratfreies und ultrafeines Abtragen von Keramik, ohne den Werkstoff klinisch relevant zu schädigen. Für die Fertigung von Restaurationen mittels Ultrakurzpulslaser ist allerdings eine NC-gesteuerte Positioniereinheit erforderlich, die den Fokus des Laserstrahls gegenüber dem Werkstoffrohling bzw. diesen relativ zum Fokus definiert dreidimensional verfährt. Die Positioniereinheit kann Linear- und Drehachsen und/oder einen Galvanometer-Scanner aufweisen.

Ein besonders genauer Abtrag wird durch eine gleichzeitige Abstandsregelung erzielt, bei welcher zeitnah nach oder während der Laser-Ablation die Distanz vom Laser zum Werkstück gemessen wird. Zusammen mit vorhergehenden Abstandsmessungen kann der Abtrag bestimmt werden. Mögliche Meßverfahren sind u. a. in der DE 100 20 559 A1 beschrieben, z. B. kann ein Teil des Laserstrahls nicht zum Abtragen von Material, sondern für Meßzwecke benutzt werden.

Spanenden Verfahren hingegen mangelt es an Präzision für die Formerzeugung komplexer Kauflächen aufgrund der endlichen Durchmesser der Fräser und Schleifkörper. Außerdem erfahren durch ihre Schwingungen spröde Werkstoffe eine Schädigung, die zum Verlust der initialen mechanischen Festigkeit führt. So ist es z. B. nur mit dem erfindungsgemäßen Verfahren möglich, bei Kronen- und Brückengerüsten Wandstärken von weniger als 0,1 bis 0,2 mm zu erzielen.

Ein weiterer Vorteil der Erfindung ist, daß mit Hilfe des Ultrakurzpulslasers in zahnärztliche Restaurationen aus HIP-Y-ZrO₂- Keramik an der späteren Fügefläche definierte mikromechanisch wirkende Retentionsmuster eingearbeitet werden können, um einen wesentlich verbesserten Haftverbund mit dem Befestigungszement zu erzielen.

Das erfindungsgemäße Verfahren vereinfacht auch die Fertigung von individuell geformten Implantatabutments aus HIP-Y-ZrO₂- Keramik. Dabei kann ebenfalls ein gleichzeitig eingearbeitetes, definiertes mikromechanisch wirkendes Retentionsmuster, das bisher gemäß EP 1 013 236 B1 gefräst werden mußte, den Haftverbund mit Befestigungszementen erhöhen.

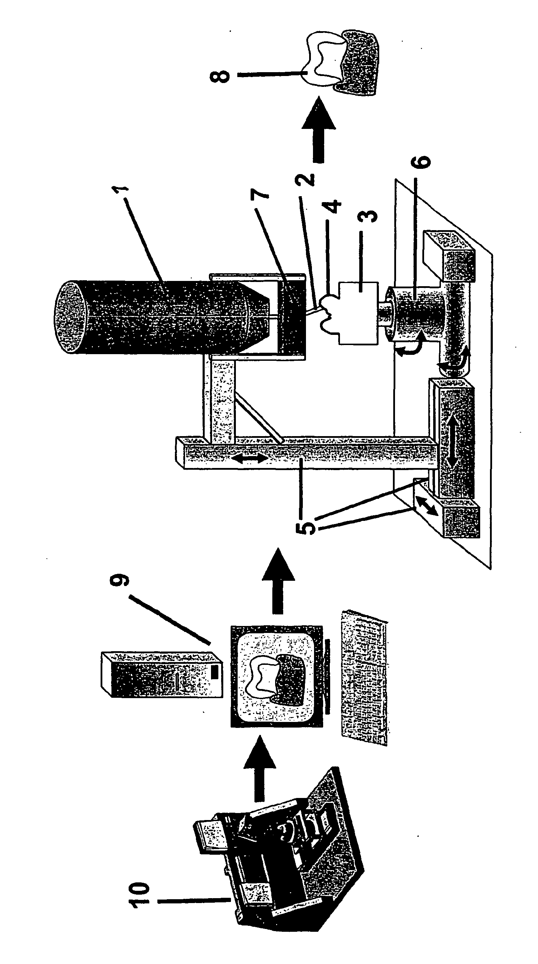

Eine mögliche Anwendung des erfindungsgemäßen Verfahrens wird im folgenden anhand der Zeichnung beispielhaft dargestellt.

Eine dreidimensionale Vermessungseinheit 10 erfaßt die Oberfläche eines präparierte Zahnes, der Nachbarzähne und des Gegenzahnes an einem Gipsmodell, das die intraorale anatomische Situation detailgetreu wiedergibt. Die Meßdaten werden in ein CAx-System 9 eingelesen und dienen als Konstruktionsgrundlage für eine vollständige Zahnkrone mit Kaufläche. Die Innen- und Außenflächen der Krone dienen zur Berechnung der Laserstrahlführung, um die Krone mit der Kaufläche 4 aus dem HIP-Y-ZrO₂-Keramik-Rohling 3 herauszuarbeiten. Hierbei wird die überschüssige Keramik vollständig durch den Ultrakurzpulslaser 1 ablatiert bzw. abgelöst, indem zunächst in Annäherung an die herzustellende Form ein so großes Volumen wie möglich durch Schnitte in Stücken abgetrennt und dann nur noch der Rest durch den Laserstrahl wegerodiert bzw. ohne nachhaltige Wärmeeinwirkung auf angrenzende Materialbereiche weggebrannt wird. Mittels einer NC-gesteuerten Positioniereinheit mit z. B. Linear- und/oder Drehachsen 5 bzw. 6 und/oder einem Galvanometer-Scanner 7 kann der Fokus des Laserstrahls 2 gegenüber dem Werkstoffrohling 3 definiert dreidimensional verfahren werden.

## Patentansprüche

1. Verfahren zur automatisierten Fertigung von Zahnersatz in Form von zahnärztlichen Restaurationen aus Keramik oder von keramischen, individuell geformten Abutments dentaler Implantate unter Anwendung eines computergesteuerten Lasers zur Formgebung durch Materialabtrag von einem Keramikrohling, **dadurch gekennzeichnet, daß** wenigstens ein dreidimensional konturierter Oberflächenbereich des Zahnersatzes (4, 8) mittels eines Ultrakurzpulslasers (1) aus dem Keramikrohling (3) herausgearbeitet und zu der vorbestimmten Form gestaltet wird.

2. Verfahren nach Anspruch 1, **dadurch gekennzeichnet, daß** mittels des Ultrakurzpulslasers (1) in einem ersten Arbeitsschritt der größte Teil des zum Herausarbeiten des dreidimensional konturierten Oberflächenbereichs des Zahnersatzes (4, 8) von dem Keramikrohling (3) abzutragenden Materials in Stücken abgeschnitten wird, wobei die Oberfläche des Keramikrohlings (3) an die herzustellende Oberfläche des Zahnersatzes (4, 8) angenähert wird, und anschließend der Rest des über der zu gestaltenden Oberfläche des Zahnersatzes (4, 8) vorhandenen Materials durch erodierende Arbeitsweise des Ultrakurzpulslagers (1) vergast wird.

3. Verfahren nach Anspruch 1 oder 2, **dadurch gekennzeichnet, daß** ein Zahnersatz in Form eines Kronen- oder Brückengerüsts an den Kauflächen und/oder den Zahnflanken mittels des Ultrakurzpulslasers (1) mit einer Wandstärke von etwa 0,1 bis 0,2 mm geformt wird.

4. Verfahren nach einem der Ansprüche 1 bis 3, **dadurch gekennzeichnet, daß** der Ultrakurzpulslaser (1) mit einer Pulsdauer unter 500 fs betrieben wird.

5. Verfahren nach einem der Ansprüche 1 oder 4, **dadurch gekennzeichnet, daß** der Ultrakurzpulslaser mit einer Abstandsregelung betrieben wird, wobei die Messung des Abstands zwischen dem Laser und der momentan bearbeiteten Oberfläche des Zahnersatzes während des Bearbeitungsprozesses stattfindet.

6. Verfahren nach einem der Ansprüche 1 bis 5, **dadurch gekennzeichnet, daß** als Material des Keramikblocks hochfestes, heiß-isostatisch-gepreßtes, mit Yttrium dotiertes Zirkoniumdioxid verwendet wird.

7. Verfahren nach einem der Ansprüche 1 bis 6, **dadurch gekennzeichnet, daß** die Flächen der Restauration (8) für die Befestigung am Zahn bzw. die Flächen des Implantatabutments für das Befestigen einer Restauration (8) durch das Einarbeiten von definierten Retentionsmustern mit Hilfe des Ultrakurzpulslasers (1) eine Oberflächenvergrößerung erfahren.

8. Verfahren nach einem der Ansprüche 1 bis 7, **dadurch gekennzeichnet, daß** für die Fertigung von Restaurationen (8) oder von Implantatabutments mittels Ultrakurzpulslaser eine NC-gesteuerte Positioniereinheit (5, 6) verwendet wird, die Linear- und/oder Drehachsen und/oder einen Galvanometer-Scanner (7) aufweist und durch die der Fokus des Laserstrahls (2) gegenüber dem Werkstoffrohling (3) definiert dreidimensional verfahrbar ist.

9. Nach dem Verfahren nach einem der Ansprüche 1 bis 8 hergestelltes Kronen- oder Brückengerüst, **dadurch gekennzeichnet, daß** es in wenigstens einem Bereich eine Wandstärke von maximal etwa 0,1 bis 0,2 mm aufweist.

## Claims

1. A method for the automated production of a dental replacement in the form of dental restorations consisting of ceramic material or of ceramic, individually formed abutments of dental implants using a computer-controlled laser for shaping by removing material from a ceramic blank, **characterised in that** at least one three-dimensionally contoured surface region of the dental replacement (4, 8) by means of a very high frequency pulsed laser (1) is machined from the ceramic blank (3) and shaped into the predetermined form.

2. A method according to Claim 1, **characterised in that** by means of the very high frequency pulsed laser (1), in a first operating step, the majority of the material to be removed from the ceramic blank (3) for machining the three-dimensionally contoured surface region of the dental replacement (4, 8) is cut away in pieces, wherein the surface of the ceramic blank (3) is approximated to the surface of the dental replacement (4, 8) to be produced and, subsequently, the remainder of the material present over the surface of the dental replacement (4, 8) to be shaped is gasified by an erosive mode of operation of the very high frequency pulsed laser.

3. A method according to Claim 1 or 2, **characterised in that** a dental replacement is formed in the shape of a crown or bridge framework on the masticatory surfaces and/or on the tooth flanks by means of the very high frequency pulsed laser (1) with a wall thickness of approximately 0.1 to 0.2 mm.

4. A method according to any one of Claims 1 to 3, **characterised in that** the very high frequency pulsed laser (1) is operated at a pulse duration of below 500 fs.

5. A method according to any one of Claims 1 to 4, **characterised in that** the very high frequency pulsed laser is operated with distance regulation, wherein the measurement of the distance between the laser and the instantaneously machined surface of the dental replacement takes place during the machining process.

6. A method according to any one of Claims 1 to 5, **characterised in that** high-strength, hot isostatically pressed yttrium-doped zirconium dioxide is used as material for the ceramic block.

7. A method according to any one of Claims 1 to 6, **characterised in that** the surfaces of the restoration (8) for the fastening to the tooth or the surfaces of the implant abutment for the fastening of a restoration (8) undergo a surface enlargement by the incorporation of defined retention patterns by means of the very high frequency pulsed laser (1).

8. A method according to any one of Claims 1 to 7, **characterised in that** for the production of restorations (8) or of implant abutments by means of very high frequency pulsed laser a NC-controlled positioning unit (5, 6) is used which has linear and/or rotational axes and/or a galvanometer scanner (7), and by which the focus of the laser beam (2) can be moved in a defined three-dimensional manner relative to the material blank (3).

9. A crown or bridge framework produced in accordance with the method according to any one of Claims 1 to 8, **characterised in that** in at least one region it has a wall thickness of at maximum approximately 0.1 to 0.2 mm.

## Revendications

1. Procédé de fabrication automatique de prothèses dentaires sous la forme de restaurations dentaires en céramique, d'ébauches en céramique, formées individuellement pour des implants dentaires, utilisant un laser commandé par ordinateur pour la mise en forme par enlèvement de matière sur une ébauche en céramique,
**caractérisé en ce que**
dans une ébauche de céramique (3) on usine au moins une zone de surface à contour tridimensionnel de la prothèse dentaire (4, 8) par un laser à impulsions ultracourtes (1) et on lui donne la forme prédéfinie.

2. Procédé selon la revendication 1,
**caractérisé en ce qu'**
à l'aide du laser à impulsions ultracourtes (1), dans une première étape on dégage la plus grande partie de la zone de surface à contour tridimensionnel de la prothèse dentaire (4, 8) à dégager de l'ébauche en céramique (3) par enlèvement, en coupant des morceaux,
la surface de l'ébauche en céramique (3) se rapprochant de la surface de la prothèse dentaire (4, 8) à fabriquer, et
ensuite on enlève le reste de la matière existant au-dessus de la surface à dégager de la prothèse dentaire (4, 8) par un travail par érosion par dégazage au laser à impulsions ultracourtes (1).

3. Procédé selon la revendication 1 ou 2,
**caractérisé en ce qu'**
on forme une prothèse dentaire sous la forme d'une ossature de couronne ou de bridge au niveau de la surface des mâchoires et/ou des flancs des dents par un laser à impulsions ultracourtes (1) et ayant une épaisseur de paroi de l'ordre de 0,1 jusqu'à 0,2 mm.

4. Procédé selon l'une des revendications 1 à 3,
**caractérisé en ce que**
le laser à impulsions ultracourtes (1) travaille avec une durée d'impulsions inférieure à 500 fs.

5. Procédé selon l'une des revendications 1 ou 4,
**caractérisé en ce qu'**
on fait fonctionner le laser à impulsions ultracourtes avec une régulation de distance, en faisant au cours du procédé d'usinage la mesure de la distance entre le laser et la surface de la prothèse dentaire en cours d'usinage à cet instant.

6. Procédé selon l'une des revendications 1 à 5,
**caractérisé en ce que**
la matière du bloc en céramique est du dioxyde de zirconium dopé à l'yttrium, à haute résistance, pressé à chaud en mode isostatique.

7. Procédé selon l'une des revendications 1 à 6,
**caractérisé en ce que**
les surfaces de restauration (8) pour la fixation à la dent ou les surfaces des butées d'implant pour la fixation d'une restauration (8) présentent une augmentation de la surface supérieure, par l'usinage de modèles de rétention définis à l'aide du laser à impulsions ultracourtes (1).

8. Procédé selon l'une des revendications 1 à 7,
**caractérisé en ce que**
pour la fabrication de restauration (8) ou de butées d'implant, à l'aide d'un laser à impulsions ultracourtes on utilise une unité de positionnement (5, 6) à commande numérique ayant des axes linéaires et/ou des axes de rotation et/ou un dispositif de balayage à galvanomètre (7) et ce dispositif permet de déplacer le foyer du faisceau laser (2) de manière définie en trois dimensions par rapport à l'ébauche de matière (3).

9. Structure de couronne ou de bridge fabriquée selon le procédé de l'une des revendications 1 à 8,
**caractérisée en ce qu'**
au moins dans une zone elle présente une épaisseur de paroi au maximum de l'ordre de 0,1 jusqu'à 0,2 mm.
